# EUROPÄISCHE PATENTSCHRIFT

(11) **EP 2 938 521 B1**
(45) Veröffentlichungstag und Bekanntmachung des Hinweises auf die Patenterteilung: **21.06.2017**
(21) Anmeldenummer: 13815738.3
(22) Anmeldetag: 20.12.2013
(51) Int. Cl.: B60R 25/24, E05F 15/73

(54) **SCHLIESSVORRICHTUNG FÜR EIN FAHRZEUG UND VERFAHREN ZUM BETREIBEN EINER SCHLIESSVORRICHTUNG**
CLOSING DEVICE FOR A VEHICLE, AND METHOD FOR OPERATING A CLOSING DEVICE
DISPOSITIF DE FERMETURE POUR UN VEHICULE ET PROCÉDÉ POUR FAIRE FONCTIONNER UN DISPOSITIF DE FERMETURE

(30) Priorität: 28.12.2012 DE 102012025366
(43) Veröffentlichungstag der Anmeldung: 04.11.2015
(73) Patentinhaber: Volkswagen Aktiengesellschaft, 38440 Wolfsburg (DE)
(72) Erfinder: ETTE, Bernd, 38442 Wolfsburg (DE); WOLF, Richard, 38100 Braunschweig (DE)
(86) Internationale Anmeldenummer: PCT/EP2013/077623
(87) Internationale Veröffentlichungsnummer: WO 2014/102178

(56) Entgegenhaltungen:
- EP-A1- 2 154 035
- DE-A1-102007 041 288
- DE-A1-102009 017 404
- DE-A1-102009 023 594
- DE-A1-102010 001 263
- DE-A1-102010 060 364
- DE-U1-202005 020 140
- FR-A1- 2 899 622
- FR-A1- 2 917 771
- FR-A1- 2 917 773
- US-A1- 2002 036 259
- US-A1- 2008 129 446

## Beschreibung

Die Erfindung betrifft eine Schließvorrichtung für ein Fahrzeug und ein Verfahren zum Betreiben einer Schließvorrichtung eines Fahrzeugs, wobei die Vorrichtung ein entlang eines Weges bewegliches Element, einen Antrieb, ein Bedienelement und Mittel zur Erfassung der Position eines dem Fahrzeug zugeordneten ID-Gebers umfasst, wobei der Antrieb ausgestaltet ist, das bewegliche Element entlang dem Weg zu bewegen.
Es sind Keyless-Entry-Systeme bekannt, bei denen die Zugangsberechtigung zu einem Kraftfahrzeug ohne ein Einführen eines Schlüssels in ein Fahrzeugschloss ermittelt wird. In der DE 102005034097 A1 wird eine Vorrichtung beschrieben, die es für ein sogenanntes Keyless-Entry-System ermöglicht den Schlüssel auch möglichst genau im Umfeld des Fahrzeugs zu bestimmen. Die Positionsbestimmung erfolgt über verschiedene LF-Antennen (Low-Frequency). Durch eine angepasste Anordnung der Antennen und angepasste Sendeleistung des elektromagnetischen Feldes kann der Positionsbereich des Fahrzeugschlüssels im Umfeld des Fahrzeugs genau bestimmt werden.
Im Stand der Technik sind zudem allgemein Schließvorrichtungen bekannt, bei denen die Heckklappe mit einem Antrieb versehen ist und nach Betätigung eines Tasters automatisch schließt. Der Taster ist häufig an der Innenseite der Heckklappe angeordnet, die nur in der geöffneten Stellung der Heckklappe zugänglich ist. Nachteilig an diesen Verfahren ist, dass eine Person nach Betätigung einer Schließanforderung den Schwenkbereich der Heckklappe oder der Tür sofort verlassen muss, um nicht die Schließbewegung zu stören.
Nachteilig an diesen bekannten Verfahren ist, dass zum Schließen von bewegten Elementen eine Aktion durch eine Person notwendig ist, nachdem die Person ein zu entladenes Gut aufgenommen hat.
Zudem ist durch die durch die DE 10 2009 023 594 A1 eine Schließvorrichtung einer Heckklappe bekannt, die über optischen und kapazitiven Sensoren eine Gestik als Schließsignal erkennt. Hierbei findet eine Überwachung des Schwenkbereichs der Heckklappe über die optischen Sensoren statt. Nachteilig an dieser Lösung ist der Einsatz von zusätzlichen Sensoren, die einer kostengünstigen Lösung entgegenstehen.

Aufgabe der vorliegenden Erfindung besteht darin, Möglichkeiten zur Behebung zumindest eines der oben aufgezählten Nachteile zu finden.
Erfindungsgemäß wird diese Aufgabe gelöst durch ein Verfahren nach Anspruch 1 und eine Vorrichtung nach Anspruch 10. Die Unteransprüche zeigen vorteilhafte Ausprägungen der Erfindung.
Erfindungsgemäß wird ein Verfahren zum Betreiben einer Schließvorrichtung eines Fahrzeugs beschrieben. Dabei umfasst die Schließvorrichtung ein entlang eines Weges bewegliches Element, einen Antrieb, ein Bedienelement zur Schließanforderung und Mittel zur Erfassung der Position eines dem Fahrzeug zugeordneten ID-Gebers umfasst. Der Antrieb ist ausgestaltet, das bewegliche Element entlang dem Weg zu bewegen. Eine Schließbewegung des beweglichen Elements wird mittels des Antriebs gestartet,
- wenn die Betätigung eines Bedienelements erfasst wird,
- wenn ein dem Fahrzeug zugeordneter ID-Geber innerhalb eines ersten Zeitfensters t nach Betätigung des Bedienelements in einem ersten Positionsbereich erfasst wird,
- wenn der dem Fahrzeug zugeordneter ID-Geber nach dem Erfassen in dem ersten Positionsbereich innerhalb des Zeitfensters t mindestens eine erste Zeitspanne s lang, die zumindest innerhalb des ersten Zeitfensters t beginnt, nicht in dem ersten Positionsbereich erfasst wird.
Ein ID-Geber ist erfindungsgemäß eine Vorrichtung, die die sich gegenüber dem Fahrzeug als berechtigt ausweist. Dieses kann Fahrzeugschlüssel, eine ID-Scheckkarte, ein Schlüsselanhänger aber auch ein Mobilgerät, z.B. ein Mobiltelefon oder PDA, sein, wobei der ID-Geber derart mit einem Mittel im Fahrzeug kommunizieren kann, so dass ein Positionsbereich des ID-Gebers erfassbar ist. Vorteilhafterweise ist der ID-Geber als sogenannter Keyless-Entry-ID-Geber ausgeführt.
Der erste Positionsbereich umfasst zumindest den Fahrzeuginnenraum und den Schwenkbereich des beweglichen Elements. Somit kann der Träger des ID-Gebers beim Entladen des Fahrzeuginnenraums oder des Kofferraums nach Betätigung des Bedienelements zur Schließanforderung das zu entladenen Gut in Ruhe aufnehmen und sich vom Schwenkbereich des beweglichen Elements entfernen.

Sollte sich der ID-Geber weiterhin im ersten Positionsbereich befinden, so wird die Schließbewegung nicht gestartet. Sollte sich der ID-Geber im Fahrzeuginnenraum befinden, kann vorteilhafterweise nach Ablauf des ersten Zeitfensters ein Hinweis, z. B. ein akustischer oder optischer Hinweis, erfolgen, dass sich der ID-Geber im Fahrzeuginnenraum befindet. Somit wird der Nutzer frühzeitig darauf aufmerksam, dass er den ID-Geber an sich zu nehmen hat.
Das Zeitfenster t wird nach Betätigung des Bedienelements geöffnet. Dieses Zeitfenster t bestimmt, wie lange sich der ID-Geber im ersten Positionsbereich befinden darf, ohne dass das Verfahren abgebrochen wird. Dieses Zeitfenster t sollte so groß sein, dass der bedienenden Person eine Aufnahme von Gütern und eine bequemes Verlassen des ersten Positionsbereich ermöglich ist. Dieses Zeitfenster t sollte aber so klein sein, dass der bedienen Person die Betätigung des Bedienelements noch bewusst ist. Vorteilhafterweise umfasst das Zeitfenster t einen Zeitraum von 1-20 Sekunden, insbesondere von 10 Sekunden.
Über die erste Zeitspanne s wird sichergestellt, dass der ID-Geber den ersten Positionsbereich zuverlässig verlassen hat. Dadurch, dass eine Zeitspanne s vorgegeben wird, wird verhindert, dass die Schließbewegung durch einmalige Erfassung des ID-Gebers außerhalb des ersten Positionsbereichs begonnen wird. Erst wenn der ID-Geber mehrfach außerhalb des ersten Positionsbereichs liegt, kann sichergestellt werden, dass keine fehlerhafte Erfassung vorliegt. Vorteilhafterweise liegt die Zeitspanne zwischen 1 und 5 Sekunden, insbesondere bei 2 Sekunden. Erfindungsgemäß wird der dem Fahrzeug zugeordnete ID-Geber nach dem Erfassen in dem ersten Positionsbereich innerhalb des Zeitfensters t mindestens eine Zeitspanne s lang in einem dritten Positionsbereich erfasst. Die Zeitspanne s beginnt zumindest innerhalb des Zeitfensters t. Der dritte Positionsbereich befindet sich außerhalb des ersten Positionsbereichs. Mittels des dritten Positionsbereichs kann zuverlässig ermittelt werden, dass sich der ID-Geber außerhalb des ersten Positionsbereichs befindet und eine Fehlbestimmung weitestgehend ausgeschlossen werden kann.
In einer weiteren erfindungsgemäßen Ausprägung des Verfahrens umfasst der dritte Positionsbereich mindestens zwei Teilpositionsbereiche. Dem jeweiligen Teilpositionsbereich kann jeweils ein separates Mittel zur Erfassung der Position eines dem Fahrzeug zugeordneten ID-Gebers zugeordnet sein. Es kann aber auch ein Mittel zur Erfassung für mehr als einen Teilpositionsbereich genutzt werden. Auch eine Kombination mehrerer Mittel zur Erfassung zur genaueren Positionsermittlung ist denkbar.

In einer weiteren erfindungsgemäßen Ausprägung des Verfahrens befinden sich ein Teilpositionsbereich am Heckbereich des Fahrzeugs und mindestens ein Teilpositionsbereich im Bereich der Fahrzeugtüren. Durch die Verteilung der Teilpositionsbereiche um das Fahrzeug herum, kann eine genauere Erfassung der Position des ID-Gebers ermöglicht werden.

Die Bewegung des beweglichen Elements wird angehalten, wenn der dem Fahrzeug zugeordnete ID-Geber in einem zweiten Positionsbereich erfasst wird, der mindestens einen Teilbereich des ersten Positionsbereichs umfasst. Somit stoppt die Bewegung des beweglichen Elements, wenn der Träger des ID-Gebers sich in den zweiten Positionsbereich begibt, und es wird eine Kollision mit dem ID-Geber-Träger vermieden.

Der zweite Positionsbereich dient erfindungsgemäß dazu, die Schließbewegung des beweglichen Elements zu stoppen, wenn der ID-Geber in den zweiten Positionsbereich kommt. Der zweite Positionsbereich umfasst zumindest einen Teilbereich des ersten Positionsbereichs. In einer ersten Ausführungsform entspricht der zweite Positionsbereich dem ersten Positionsbereich. In einer weiteren Ausführungsform ist der zweite Positionsbereich an der jeweiligen Stellung des beweglichen Elements dynamisch angepasst, d. h. der zweite Positionsbereich wird durch die Bewegung des beweglichen Elements verändert. Es kann aber auch vorgesehen sein, dass der zweite Positionsbereich nur einen überlappenden Bereich zum ersten Positionsbereich aufweist.

In einer weiteren Ausgestaltung der Erfindung wird nach dem Anhalten des beweglichen Elements das bewegliche Element in eine Öffnungsbewegung überführt. Die Öffnungsbewegung wird gestoppt, sobald das bewegliche Element eine festgelegte Position erreicht hat. Vorteilhafterweise ist die festgelegte Position diejenige Position, die das bewegliche Element vor Betätigung des Bedienelements eingenommen hatte. Dieses hat den Vorteil, wenn der Träger des ID-Gebers einen Gegenstand im Fahrzeug vergessen hat, dass der Träger durch Rückkehr in den zweiten Positionsbereich ein Öffnen des beweglichen Elements veranlassen kann, so dass er beispielsweise einen Gegenstand, welchen er in den Händen trägt, wieder im Fahrzeug absetzen kann.

In einer weiteren Ausgestaltung der Erfindung wird das Fahrzeug entweder nach Erfassung der Betätigung des Bedienelements oder nach Beendigung der Schließbewegung automatisch verriegelt. Somit ist keine zusätzliche Aktion der Person notwendig, die den ID-Geber trägt, um das Fahrzeug zu verriegeln. Durch die Betätigung des Bedienelements vor dem Verschließen des Fahrzeugs, ist der Verriegelungswunsch der Person vom Fahrzeug aufgenommen worden. Eine Verriegelung direkt nach der Erfassung der Betätigung des Bedienelements führt vorteilhafterweise dazu, dass das Fahrzeug möglichst schnell verriegelt ist, d.h. alle Schließelemente wie beispielsweise die Türen sind sofort verriegelt, so dass ein Zugang zum Fahrzeug für Unberechtigte unterbunden wird. Sollte eine Tür noch offen sein, so wird der Schließmechanismus der Tür verriegelt, so dass die Tür kann noch geschlossen werden kann. Das bewegliche Element ist direkt nach der Betätigung des Bedienelements noch offen, der Schließmechanismus des beweglichen Elements wird jedoch verriegelt, so dass nach Beendigung des Schließvorgangs das bewegliche Element geschlossen und verriegelt ist.

Die Erfindung umfasst auch eine Schließvorrichtung für ein Fahrzeugs umfassend ein entlang eines Weges bewegliches Element, einen Antrieb, ein Bedienelement und Mittel zur Erfassung der Position eines dem Fahrzeug zugeordneten ID-Gebers, wobei der Antrieb ausgestaltet ist, das bewegliche Element entlang dem Weg zu bewegen, dadurch gekennzeichnet, dass es Mittel zur Durchführung des oben beschriebenen Verfahrens umfasst.

In einer weiteren Ausgestaltung der Erfindung ist das bewegliche Element eine Heckklappe, ein Kofferraumdeckel, ein Schiebetür oder eine Schwenktür. In einer weiteren Ausgestaltung der Erfindung ist das Bedienelement durch einen Taster, einen kapazitiven Sensor oder einen optischen Sensor gebildet. In einer weiteren Ausgestaltung der Erfindung ist das Bedienelement nur zugänglich, wenn das bewegliche Element in einer zumindest teilweise geöffneten Stellung ist.

In einer weiteren Ausgestaltung der Erfindung ist am Bedienelement ein Signalisierungselement angeordnet zur Signalisierung, dass das Bedienelement betätigt wurde. Die Signalisierung ist solange aktiv, bis die Schießbewegung des beweglichen Elements gestartet ist oder bis das Zeitfenster t geschlossen ist. In einer weiteren Ausgestaltung der Erfindung erfolgt die Signalisierung alternativ oder zusätzlich über eine rechte und/oder linke Bremsleuchte oder einer dritten Bremsleuchte.

Die vorliegende Erfindung wird nun anhand der Zeichnungen näher erläutert, in denen zeigen:
- Figur 1: stellt ein Fahrzeug mit der erfindungsgemäßen Schließvorrichtung dar.
- Figur 2 a - b: stellen jeweils ein Bedienelement mit einem Signalisierungselement dar.
- Die Figuren 3 a - c: zeigen zeitliche Abfolgen des erfindungsgemäßen Verfahrens.
- Figur 4: stellt ein Fahrzeug mit dem dritten Positionsbereich und Teilpositionsbereichen dar.

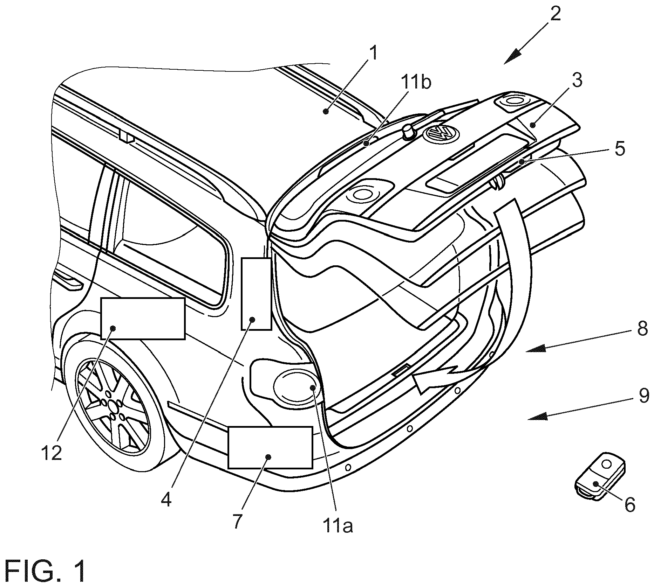

In Fig.1 ist ein Fahrzeug 1 mit der erfindungsgemäßen Schießvorrichtung 2 dargestellt. Die Schließvorrichtung 2 umfasst ein entlang eines Weges bewegliches Element 3. Das bewegliche Element ist hier beispielhaft als Heckklappe eines Fahrzeugs dargestellt. Es kann aber auch ein Kofferraumdeckel, eine Schiebetür oder eine Schwenktür sein. Das bewegliche Element 3 wird mittels eines symbolisch dargestellten Antriebs 4 bewegt. Zudem ist ein Bedienelement 5 dargestellt, mittels dessen die Schließung des beweglichen Elements gestartet werden kann. Weiterhin sind symbolisch Mittel 7 zur Erfassung der Position eines dem Fahrzeug zugeordneten ID-Gebers 6 dargestellt. Die Mittel 7 zur Erfassung des ID-Gebers 6 erfolgt über bekannte Ortungsverfahren mittels Funk, Ultraschall, Radar oder ähnliche Methoden. Ein erster Positionsbereich 8 umfasst zumindest einen Innenraum des Fahrzeugs 1 und einen Schwenkbereich des beweglichen Elements 3. Der zweite Positionsbereich 9 umfasst zumindest einen Teilbereich des Positionsbereichs 8. Die Schließbewegung des beweglichen Elements 3 wird mittels des Antriebs 4 gestartet,
- wenn die Betätigung eines Bedienelements 5 erfasst wird,
- wenn ein dem Fahrzeug 1 zugeordneter ID-Geber 6 innerhalb eines Zeitfensters t nach Betätigung des Bedienelements 5 in einem ersten Positionsbereich 8 erfasst wird,
- wenn der dem Fahrzeug 1 zugeordneter ID-Geber 6 nach dem Erfassen in dem ersten Positionsbereich 8 innerhalb des Zeitfensters t mindestens eine Zeitspanne s lang, die zumindest innerhalb des Zeitfensters t beginnt, nicht in dem ersten Positionsbereich 8 erfasst wird.

Die Bewegung des beweglichen Elements 3 kann angehalten werden, wenn der dem Fahrzeug 1 zugeordnete ID-Geber 6 in einem zweiten Positionsbereich 9 erfasst wird.
Über ein Steuergerät 12 wird die Betätigung des Bedienelements 5 erfasst und der Antrieb 4 gesteuert. Zudem ist das Steuergerät 12 mit dem Mittel 7 zur Erfassung des ID-Gebers 6 datentechnisch verbunden. In einer weiteren Ausführungsform kann über das Steuergerät 12 eine rechte und/oder linke Bremsleuchte 11 a, eine dritte Bremsleuchte 11 b oder ein Signalisierungselement 11 am Bedienelement 5 angesteuert werden.

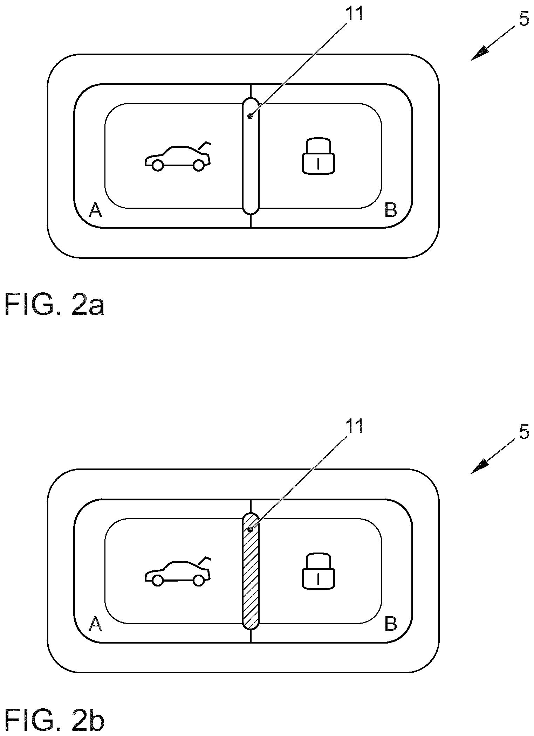

In Fig. 2a und 2b ist eine beispielhafte Anordnung des Bedienelements 5 dargestellt. Das Bedienelement enthält beispielhaft zwei Taster (Taster A und Taster B). Die Taster können auch als kapazitiver oder optischer Sensor ausgeführt sein. Zwischen der Taste A und der Taste B ist ein Signalisierungselement 11 dargestellt. Eine Signalisierung des aktiven Zustands erfolgt zumindest solange, bis die Schießbewegung des beweglichen Elements 3 gestartet ist oder bis das Zeitfenster t geschlossen ist. In Fig. 2a ist das Signalisierungselement 11 inaktiv du in Fig. 2b aktiv dargestellt. Nach Betätigung des Tasters B erfolgt ein Schließen und Verriegeln der Heckklappe entsprechend des in Fig. 1 dargestellten Verfahrens und der Vorrichtung.

Nach einer Betätigung des Taster A öffnet bzw. schließt das bewegliche Element 3 ohne eine Ortung des ID-Gebers 6. Mittels der Taste A ist ein Schließen des beweglichen Elements möglich, ohne dass der ID-Geber im Besitz der betätigenden Person ist. Allerdings wird das bewegliche Element nach Beendigung des Schließvorgangs nicht verriegelt. Die Schließbewegung nach Betätigung des Tasters A kann sofort nach der Betätigung oder nach Ablauf einer definierten Zeit erfolgen.

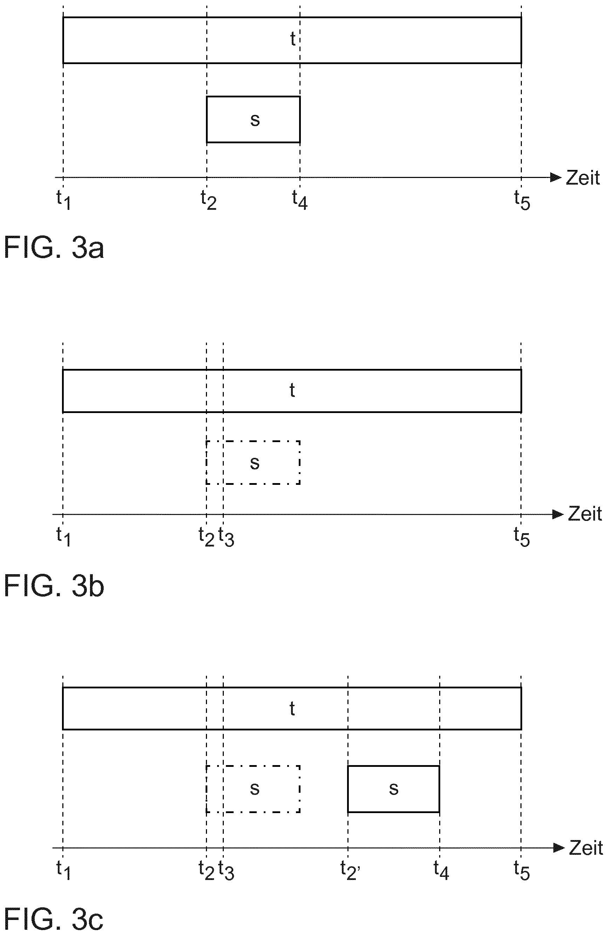

In Fig. 3 a - c sind zeitliche Abfolgen des erfindungsgemäßen Verfahrens dargestellt.
In Fig. 3a ist ein beispielhafter Ablauf einer Betätigung der Schließvorrichtung dargestellt. Zum Zeitpunkt t₁ wird das Betätigungselement 5 betätigt und das Zeitfenster t öffnet sich. Der Zeitpunkt t₂ ist der Zeitpunkt, an dem der ID-Geber 6 in einem Bereich außerhalb des ersten Positionsbereichs 8 erfasst wird. Auch innerhalb der Zeitspanne s wird der ID-Geber 6 nicht mehr im ersten Positionsbereich 8 erfasst. Somit kann zum Zeitpunkt t₄ die Schließbewegung des beweglichen Elements 3 mittels des Antriebs 4 gestartet werden.

In Fig. 3b ist ein weiterer beispielhafter Ablauf einer Betätigung der Schließvorrichtung dargestellt. Zum Zeitpunkt t₁ wird das Betätigungselement 5 betätigt und das Zeitfenster t öffnet sich. Der Zeitpunkt t₂ ist der Zeitpunkt, an dem der ID-Geber 6 in einem Bereich außerhalb des ersten Positionsbereichs 8 erfasst wird. Innerhalb der Zeitspanne s wird der ID-Geber 6 wieder im ersten Positionsbereich 8 erfasst und verbleibt auch in dem Positionsbereich 8. Somit wird bis zum Zeitpunkt t₅, d. h. bis zum Schließen des Zeitfensters t, kein Signal für eine Schließbewegung des beweglichen Elements 3 mittels des Antriebs 4 gegeben. Das bewegliche Element 3 bleibt geöffnet.

In Fig. 3c ist ein noch weiterer beispielhafter Ablauf einer Betätigung der Schließvorrichtung dargestellt. Zum Zeitpunkt t₁ wird das Betätigungselement 5 betätigt und das Zeitfenster t öffnet sich. Der Zeitpunkt t₂ ist der Zeitpunkt, an dem der ID-Geber 6 in einem Bereich außerhalb des ersten Positionsbereichs 8 erfasst wird. Innerhalb der Zeitspanne s wird der ID-Geber 6 wieder im ersten Positionsbereich 8 erfasst. Zum Zeitpunkt t_{2'} wird der ID-Geber 6 erneut in dem Bereich außerhalb des ersten Positionsbereichs 8 erfasst. Auch innerhalb einer erneuten Zeitspanne s wird der ID-Geber 6 nicht mehr im ersten Positionsbereich 8 erfasst. Somit kann zum Zeitpunkt t₄ die Schließbewegung des beweglichen Elements 3 mittels des Antriebs 4 gestartet werden.

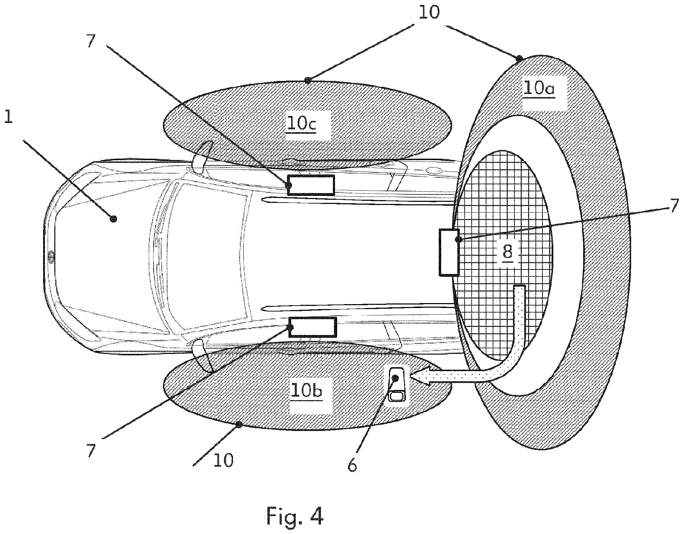

In Fig. 4 ist das Fahrzeug 1 mit dem ersten Positionsbereich 8 und dritten Positionsbereich 10 dargestellt. Beispielhaft ist hier eine Schließvorrichtung für eine Heckklappe als bewegliches Element 3 dargestellt (Heckklappe ist überdeckt durch den Positionsbereich 8). Mit Hilfe der Fig. 4 soll die vorliegende Erfindung anhand der Betätigung der Heckklappe eines erfindungsgemäßen Fahrzeugs 1 dargestellt werden.

Um diese offenstehende Heckklappe zu schließen, betätigt der Fahrer des Fahrzeugs 1, welcher einen dem Fahrzeug 1 zugeordneten ID-Gebers 6 bei sich führt, einen Bedienelement 5 (nicht dargestellt). Direkt nach dieser Betätigung des Tasters wird der Abstand des ID-Gebers 6 zum Fahrzeug 1 bestimmt. Eine Schließbewegung des beweglichen Elements 3 wird gestartet, wenn folgende Bedingungen erfüllt sind:
- Der ID-Geber 6 wird innerhalb eines Zeitfensters t nach Betätigung des Bedienelements 5 in einem ersten Positionsbereich 8 erfasst.
- Der ID-Geber 6 wird nach dem Erfassen in dem ersten Positionsbereich 8 innerhalb des Zeitfensters t mindestens eine Zeitspanne s lang, die zumindest innerhalb des Zeitfensters t beginnt, nicht in dem ersten Positionsbereich 8 erfasst.
- Der ID-Geber 6 wird nach dem Erfassen in dem ersten Positionsbereich 8 innerhalb des Zeitfensters t mindestens eine Zeitspanne s lang, die zumindest innerhalb des Zeitfensters t beginnt, in einem dritten Positionsbereich 10 erfasst, der sich außerhalb des ersten Positionsbereichs 8 befindet.

Der dritte Positionsbereich 10 umfasst in Fig. 4 beispielhaft die Teilpositionsbereiche 10a, 10b und 10c. Alternativ kann der dritte Positionsbereich auch nur den Teilbereich 10a umfassen.

Der Teilpositionsbereich 10a befindet sich im Bereich hinter dem Fahrzeug und befindet sich außerhalb des Positionsbereichs 8. Die Erfassung der Position des ID-Gebers 6 im ersten Positionsbereich 8 und im Teilpositionsbereich 10a können mittels desgleichen Erfassungsmittel 7 im Heckbereich des Fahrzeugs erfasst werden. Alternativ können auch separate Erfassungsmittel vorgesehen sein.

Die Teilpositionsbereiche 10b und 10c befinden sich im Bereich der seitlichen Türen des Fahrzeugs 1. Die Erfassung der Position des ID-Gebers 6 in den Teilpositionsbereichen 10b und 10c können mittels jeweils zugeordneten Erfassungsmitteln 7 erfasst werden.

Alternativ kann auch ein Zusammenwirken der verschiedenen Erfassungsmittel 7 zur Erfassung des ID-Gebers in den jeweiligen Positionsbereichen ermöglicht werden.

Fig. 4 zeigt eine vorteilhafte Ausprägung der Erfindung mit den Teilpositionsbereichen 10a, 10b und 10c. Beispielhaft ist eine schnelle Bewegung einer Person, die den ID-Geber 6 bei sich trägt, aus dem Positionsbereich 8 zum Teilpositionsbereich 10b dargestellt. Die Bewegung durch den Teilpositionsbereich 10a kann kürzer als die Zeitspanne s sein. Da sich der ID-Geber im Anschluss in den Teilpositionsbereich 10b bewegt, kann der ID-Geber in dem Positionsbereich 10 länger als die Zeitspanne s erfasst werden. Die Schließbewegung des beweglichen Elements 3 wird damit gestartet.

Es sind auch andere Ausführungsformen denkbar. Insbesondere kann auch das bewegliche Element eine Schiebetür sein. In diesem Fall wäre der erste Positionsbereich 8 ein Bereich im Schwenkbereich der Schiebetür, der zweite Positionsbereich 10 könnte zwei Teilpositionsbereiche 10a, 10b umfassen, wobei im diesen Fall der Positionsbereich 10a ein Bereich an der Schiebetür außerhalb des Positionsbereich 8 sein könnte. Der Positionsbereich 10b wäre bei einer seitlichen Schiebetür ein Positionsbereich hinter dem Heck des Fahrzeugs.

### Bezugszeichenliste

- 1: Fahrzeug
- 2: Schließvorrichtung
- 3: Bewegliches Element
- 4: Antrieb
- 5: Bedienelement
- 6: I D-Geber
- 7: Mittel zur Erfassung der Position des ID-Gebers
- 8: Erster Positionsbereich
- 9: Zweiter Positionsbereich
- 10: Dritter Positionsbereich
- 10a,10b, 10c: Teilpositionsbereiche
- 11: Signalisierungselement
- 11a: Bremsleuchte
- 11 b: dritte Bremsleuchte
- 12: Steuergerät
- t₁: Zeitpunkt der Betätigung des Bedienelements
- t₂: Zeitpunkt zu der ersten Erfassung, an dem der ID-Geber nicht im ersten Positionsbereich erfasst wird
- t_{2'}: Zeitpunkt zu einer weiteren ersten Erfassung, an dem der ID-Geber nicht im ersten Positionsbereich erfasst wird
- t₃: Zeitpunkt zu der ersten Erfassung, an dem der ID-Geber wieder im ersten Positionsbereich erfasst wird
- t₄: Zeitpunkt, ab welchen eine Schließbewegung starten kann
- t₅: Ende des Zeitfensters t

## Patentansprüche

1. Verfahren zum Betreiben einer Schließvorrichtung (2) eines Fahrzeugs (1), wobei die Schließvorrichtung (2) ein entlang eines Weges bewegliches Element (3), einen Antrieb (4), ein Bedienelement (5) zum Erfassen einer Schließanforderung und Mittel (7) zur Erfassung der Position eines dem Fahrzeug zugeordneten ID-Gebers (6) umfasst, wobei der Antrieb (4) ausgestaltet ist, das bewegliche Element (3) entlang dem Weg zu bewegen, wobei eine Schließbewegung des beweglichen Elements (3) mittels des Antriebs (4) gestartet wird,
• wenn die Betätigung eines Bedienelements (5) erfasst wird,
• wenn ein dem Fahrzeug (1) zugeordneter ID-Geber (6) innerhalb eines Zeitfensters t nach Betätigung des Bedienelements (5) in einem ersten Positionsbereich (8) erfasst wird,
• wenn der dem Fahrzeug (1) zugeordneter ID-Geber (6) nach dem Erfassen in dem ersten Positionsbereich (8) innerhalb des Zeitfensters t mindestens eine Zeitspanne s lang, die zumindest innerhalb des Zeitfensters t beginnt, nicht in dem ersten Positionsbereich (8) erfasst wird,
wobei die Schließbewegung nur gestartet wird, wenn zusätzlich eine Bedingung erfüllt ist, dass der ID-Geber mindestens die Zeitspanne s lang in einem dritten Positionsbereich (10) erfasst wird, der sich außerhalb des ersten Positionsbereichs (8) befindet.

2. Verfahren nach Anspruch 1, wobei der dritte Positionsbereich (10) mindestens zwei Teilpositionsbereiche (10a, 10b, 10c) umfasst.

3. Verfahren nach Anspruch 2, wobei ein Teilpositionsbereich (10a) sich am Heckbereich des Fahrzeugs (1) und ein Teilpositionsbereich (10b, 10c) sich im Bereich der Türen des Fahrzeugs (1) befindet.

4. Verfahren nach Anspruch 1, wobei die Bewegung des beweglichen Elements (3) angehalten wird, wenn der dem Fahrzeug (1) zugeordnete ID-Geber (6) in einem zweiten Positionsbereich (9) erfasst wird.

5. Verfahren nach Anspruch 4, wobei nach dem Anhalten des beweglichen Elements (3) entsprechend Anspruch 4 das bewegliche Element (3) in eine Öffnungsbewegung überführt wird und wobei die Öffnungsbewegung gestoppt wird, wenn das bewegliche Element (3) die Position erreicht hat, die das bewegliche Element (3) vor der Betätigung des Bedienelements (5) eingenommen hatte.

6. Verfahren nach einem der vorhergehenden Ansprüche, wobei das Fahrzeug (1) entweder nach Erfassung der Betätigung des Bedienelements (5) oder nach Beendigung der Schließbewegung automatisch verriegelt wird.

7. Verfahren nach einem der vorhergehenden Ansprüche, wobei der zweite Positionsbereich (9) zumindest einen Teilbereich des ersten Positionsbereichs (8) umfasst.

8. Verfahren nach einem der vorhergehenden Ansprüche, wobei die Bewegung des beweglichen Elements (3) angehalten wird, wenn über Parkdistanzsensoren (10) eine Bewegung in dem zweiten Positionsbereich (9) erfasst wird.

9. Verfahren nach einem der vorhergehenden Ansprüche, wobei nach der Betätigung des Bedienelements (5) eine Signalisierung mittels eines Signalisierungselements (11) am Bedienelement (5) und/oder einer Bremsleuchte (11a, 11b) erfolgt, wobei die Signalisierung zumindest solange erfolgt, bis die Schießbewegung des beweglichen Elements (3) gestartet ist oder bis das Zeitfenster t geschlossen ist.

10. Schließvorrichtung für ein Fahrzeug (1) umfassend ein entlang eines Weges bewegliches Element (3), einen Antrieb (4), ein Bedienelement (5) und Mittel (7) zur Erfassung der Position eines dem Fahrzeug(1) zugeordneten ID-Gebers (6), wobei der Antrieb (4) ausgestaltet ist, das bewegliche Element (3) entlang dem Weg zu bewegen, **dadurch gekennzeichnet, dass** es Mittel zur Durchführung des Verfahrens nach einem der Ansprüche 1 bis 9 umfasst.

11. Schließvorrichtung nach Anspruch 10, wobei das bewegliche Element (3) eine Heckklappe, ein Kofferraumdeckel, ein Schiebetür oder eine Schwenktür ist.

12. Schließvorrichtung nach Anspruch 11, wobei der dritte Positionsbereich (10) mindestens zwei Teilpositionsbereiche (10a, 10b, 10c) umfasst und wobei ein Teilpositionsbereich (10a) sich am Heckbereich des Fahrzeugs (1) und ein Teilpositionsbereich (10b, 10c) sich im Bereich der Türen des Fahrzeugs (1) befindet.

13. Schließvorrichtung nach einem der Ansprüche 10-12, wobei das Bedienelement (5) durch einen Taster, einen kapazitiver oder einen optischer Sensor gebildet ist.

14. Schließvorrichtung nach einem der Ansprüche 10- 13, wobei eine Bremsleuchte (11 a) und/oder ein Signalisierungselement (11) am Bedienelement (5) zur Signalisierung genutzt wird, dass das Bedienelement (5) betätigt wurde, und die Signalisierung solange aktiv ist, bis die Schießbewegung des beweglichen Elements (3) gestartet ist oder bis das Zeitfenster t geschlossen ist.

## Claims

1. Method for operating a closing device (2) of a vehicle (1), wherein the closing device (2) comprises an element (3) that can be moved along a path, a drive (4), an operating element (5) for detecting a closing request and means (7) for detecting the position of an ID transmitter (6) assigned to the vehicle, wherein the drive (4) is configured to move the movable element (3) along the path, wherein a closing movement of the movable element (3) is started by means of the drive (4),
• if the actuation of an operating element (5) is detected,
• if an ID transmitter (6) assigned to the vehicle (1) is detected in a first position region (8) within a time window t following actuation of the operating element (5),
• if, following the detection in the first position region (8) within the time window t, the ID transmitter (6) assigned to the vehicle (1) is not detected in the first position region (8) for at least a time interval s which begins at least within the time window t,
wherein the closing movement is started only if, in addition, a condition that the ID transmitter is detected in a third position region (10), which is located outside the first position region (8), for at least the time interval s is satisfied.

2. Method according to Claim 1, wherein the third position region (10) comprises at least two partial position regions (10a, 10b, 10c).

3. Method according to Claim 2, wherein one partial position region (10a) is located in the rear region of the vehicle (1), and one partial position region (10b, 10c) is located in the region of the doors of the vehicle (1).

4. Method according to Claim 1, wherein the movement of the movable element (3) is stopped if the ID transmitter (6) assigned to the vehicle (1) is detected in a second position region (9).

5. Method according to Claim 4, wherein, following the stopping of the movable element (3) in accordance with Claim 4, the movable element (3) is transferred into an opening movement, and wherein the opening movement is stopped when the movable element (3) has reached the position which the movable element (3) had assumed before the actuation of the operating element (5).

6. Method according to one of the preceding claims, wherein the vehicle (1) is automatically locked either following the detection of the actuation of the operating element (5) or after the closing movement has been completed.

7. Method according to one of the preceding claims, wherein the second position region (1) comprises at least one sub-region of the first position region (8).

8. Method according to one of the preceding claims, wherein the movement of the movable element (3) is stopped if a movement in the second position region (9) is detected via parking distance sensors (10).

9. Method according to one of the preceding claims, wherein, following the actuation of the operating element (5), signalling is carried out by means of a signalling element (11) on the operating element (5) and/or a brake light (11a, 11b), wherein the signalling is carried out at least until the closing movement of the movable element (3) has been started or until the time window t has closed.

10. Closing device for a vehicle (1), comprising an element (3) that can be moved along a path, a drive (4), an operating element (5) and means (7) for detecting the position of an ID transmitter (6) assigned to the vehicle (1), the drive (4) being configured to move the movable element (3) along the path, **characterized in that** it comprises means for carrying out the method according to one of Claims 1 to 9.

11. Closing device according to Claim 10, wherein the movable element (3) is a tailgate, a luggage compartment cover, a sliding door or a pivoting door.

12. Closing device according to Claim 11, wherein the third position region (10) comprises at least two partial position regions (10a, 10b, 10c), and wherein one partial position region (10a) is located in the rear region of the vehicle (1) and one partial position region (10b, 10c) is located in the region of the doors of the vehicle (1).

13. Closing device according to one of Claims 10-12, wherein the operating element (5) is in the form of a button or a capacitive or an optical sensor.

14. Closing device according to one of Claims 10-13, wherein a brake light (11a) and/or a signalling element (11) on the operating element (5) are/is used in order to signal that the operating element (5) has been actuated, and the signalling takes place until the closing movement of the moveable element (3) begins or until the time window t is closed.

## Revendications

1. Procédé de mise en fonctionnement d'un dispositif de fermeture (2) d'un véhicule (1), dans lequel le dispositif de fermeture (2) comprend un élément mobile (3) le long d'un trajet, un entraînement (4), un élément de commande (5) pour détecter une demande de fermeture et des moyens (7) pour détecter la position d'un transducteur d'identification (6) associé au véhicule, dans lequel l'entraînement (4) est conçu pour déplacer l'élément mobile (3) le long du trajet, dans lequel un mouvement de fermeture de l'élément mobile (3) est amorcé au moyen de l'entraînement (4),
- lorsque l'actionnement de l'élément de commande (5) est détecté,
- lorsqu'un transducteur d'identification (6) associé au véhicule (1) est détecté dans une fenêtre temporelle t après l'actionnement de l'élément de commande (5) dans une première plage de positions (8),
- lorsque, après la détection dans la première plage de positions (8) dans la fenêtre temporelle t, le transducteur d'identification (6) associé au véhicule (1) n'est pas détecté dans la première plage de positions (8) pendant au moins un laps de temps de longueur s qui commence au moins dans la fenêtre temporelle t,
dans lequel le mouvement de fermeture n'est amorcé que lorsqu'une condition selon laquelle le transducteur d'identification est détecté pendant au moins le laps de temps de longueur s dans une troisième plage de positions (10) qui se situe à l'extérieur de la première plage de positions (8), est en outre remplie.

2. Procédé selon la revendication 1, dans lequel la troisième plage de positions (10) comprend au moins deux plages de positions partielles (10a, 10b, 10c).

3. Procédé selon la revendication 2, dans lequel une plage de positions partielle (10a) se situe dans la zone arrière du véhicule (1) et une plage de positions partielle (10b, 10c) se situe dans la zone des portes du véhicule (1).

4. Procédé selon la revendication 1, dans lequel le mouvement de l'élément mobile (3) est arrêté lorsque le transducteur d'identification (6) associé au véhicule (1) est détecté dans une deuxième plage de positions (9).

5. Procédé selon la revendication 4, dans lequel, après l'arrêt de l'élément mobile (3) correspondant à la revendication 4, l'élément mobile (3) est amené à passer à un mouvement d'ouverture et dans lequel le mouvement d'ouverture est interrompu lorsque l'élément mobile (3) a atteint la position qui était adoptée par l'élément mobile (3) avant l'actionnement de l'élément de commande (5).

6. Procédé selon l'une quelconque des revendications précédentes, dans lequel le véhicule (1) est automatiquement verrouillé après détection de l'actionnement de l'élément de commande (5) ou après la fin du mouvement de fermeture.

7. Procédé selon l'une quelconque des revendications précédentes, dans lequel la deuxième plage de positions (9) comprend au moins une plage partielle de la première plage de positions (8).

8. Procédé selon l'une quelconque des revendications précédentes, dans lequel le mouvement de l'élément mobile (3) est arrêté lorsqu'un mouvement effectué dans la deuxième plage de positions (9) est détecté par l'intermédiaire de capteurs de distance de stationnement (10).

9. Procédé selon l'une quelconque des revendications précédentes, dans lequel, après actionnement de l'élément de commande (5), une signalisation est effectuée au moyen d'un élément de signalisation (11) présent sur l'élément de commande (5) et/ou d'un feu de stop (11a, 11b), dans lequel la signalisation est au moins effectuée jusqu'à ce que le mouvement de fermeture de l'élément mobile (3) soit amorcé ou jusqu'à ce que la fenêtre temporelle t soit refermée.

10. Dispositif de fermeture destiné à un véhicule (1), comprenant un élément mobile (3) le long d'un trajet, un entraînement (4), un élément de commande (5) et des moyens (7) pour détecter la position d'un transducteur d'identification (6) associé au véhicule (1), dans lequel l'entraînement (4) est conçu pour déplacer l'élément mobile (3) le long du trajet, **caractérisé en ce qu'**il comprend des moyens destinés à mettre en oeuvre le procédé selon l'une quelconque des revendications 1 à 9.

11. Dispositif de fermeture selon la revendication 10, dans lequel l'élément mobile (3) est un hayon, un capot de coffre, une porte coulissante ou une porte pivotante.

12. Dispositif de fermeture selon la revendication 11, dans lequel la troisième plage de positions (10) comprend au moins deux plages de positions partielles (10a, 10b, 10c) et dans lequel une plage de positions partielle (10a) se situe dans la zone arrière du véhicule (1) et une plage de positions partielle (10b, 10c) se situe dans la zone des portes du véhicule (1).

13. Dispositif de fermeture selon l'une quelconque des revendications 10 - 12, dans lequel l'élément de commande (5) est formé par un bouton-poussoir ou un capteur capacitif ou optique.

14. Dispositif de fermeture selon l'une quelconque des revendications 10 - 13, dans lequel un feu de stop (11a) et/ou un élément de signalisation (11) prévu sur l'élément de commande (5) est utilisé pour signaler le fait que l'élément de commande (5) a été actionné, et dans lequel la signalisation est active jusqu'à ce que le mouvement de fermeture de l'élément mobile (3) soit amorcé ou jusqu'à ce que la fenêtre temporelle t soit refermée.
